# EUROPEAN PATENT SPECIFICATION

(11) **EP 4 401 217 B1**
(45) Date of publication and mention of the grant of the patent: **02.09.2026**
(21) Application number: 23835798.2
(22) Date of filing: 04.07.2023
(51) Int. Cl.: H01M 50/24, H01M 50/383, H01M 50/375, H01M 10/658, H01M 10/04, H01M 50/30

(54) **BATTERY MODULE PART**
BATTERIEMODULTEIL
PIÈCE DU MODULE DE BATTERIE

(30) Priority: 07.07.2022 KR 20220083860
(43) Date of publication of application: 17.07.2024
(73) Proprietor: LG Energy Solution, Ltd., Seoul 07335 (KR)
(72) Inventor: JANG, Byung Do, Daejeon 34122 (KR); LEE, Hyoung Suk, Daejeon 34122 (KR); SHIN, Ju Hwan, Daejeon 34122 (KR); LEE, Jae Hyun, Daejeon 34122 (KR); KIM, Ki Young, Daejeon 34122 (KR)
(74) Representative: Plasseraud IP
(86) International application number: PCT/KR2023/009408
(87) International publication number: WO 2024/010332

(56) References cited:
- CN-U- 216 872 184
- KR-A- 20150 061 200
- KR-A- 20180 113 855
- KR-A- 20210 041 441
- KR-A- 20210 055 364
- KR-A- 20220 056 024
- KR-A- 20220 056 024
- US-A1- 2021 359 372

## Description

### [Technical Field]

The present invention relates a battery module part, and more particularly, to a battery module part capable of suppressing the spread of secondary damage such as an external fire or explosion by preventing a flame from being exposed outside a module frame even when a battery cell mounted inside the module frame overheats and generates the flame.

The application claims the benefit of priority based on Korean Patent Application No. 10-2022-0083860 dated July 7, 2022.

### [Background Art]

Unlike primary batteries, secondary batteries can be recharged and have been researched and developed extensively in recent years due to their potential for miniaturization and large capacity. The demand for secondary batteries as energy sources is increasing more rapidly due to technology development and an increase in demand for mobile devices and also due to electric vehicles and energy storage systems that are emerging in line with the needs of the times for environmental protection.

Secondary batteries are classified into coin type batteries, cylindrical type batteries, prismatic type batteries, and pouch type batteries according to the shape of a battery case. An electrode assembly mounted inside a battery case in a secondary battery is a chargeable or dischargeable power generating element consisting of a stacked structure of electrodes and a separator.

Since continuous use of a secondary battery for a long period of time is required, it is necessary to effectively control the heat generated during a charging and discharging process. When a secondary battery is improperly cooled, the resulting rise in temperature leads to an increase in current, which causes a positive feedback chain reaction that causes the temperature to rise again, ultimately triggering a catastrophic state of thermal runaway.

In addition, when secondary batteries are grouped in the form of modules or packs, thermal runaway occurring in one secondary battery causes a thermal propagation phenomenon in which other secondary batteries in the surrounding area are sequentially overheated. Furthermore, when the flame generated from an overheated secondary battery is exposed to the outside, it can not only damage surrounding devices but also spread as secondary damage such as a fire or explosion. Thus, it is necessary to prepare measures against such fire risks.

### [Related Document]

(Patent Document 1) Korean Patent Publication No. 2020-0078344 (published on June 1, 2020). Document KR 2022 0056024 discloses a battery module according to the preamble of claim 1.

### [Technical Problem]

The present invention is directed to providing a battery module frame capable of suppressing the spread of secondary damage such as an external fire or explosion by preventing the structural collapse of a frame even when a battery cell mounted inside overheats and generates a flame.

However, the technical problem to be solved by the present invention is not limited to the above-described problem, and other problems not described can be clearly understood by those skilled in the art from the description of the present invention described below.

### [Technical Solution]

One aspect of the present invention provides a battery module part according to claim 1.

The mesh may be embedded in the body by insert injection to form an integrated body, and at least a portion of the mesh is exposed on an inner surface of the body.

A portion of an outer surface of the body may include a vulnerable portion with lower heat resistance than a surrounding portion.

The vulnerable portion may be made of a different synthetic resin material with a lower melting point than the body or formed to be thinner than a surrounding portion.

A metal material of the mesh is heat-resistant stainless steel.

The mesh is embedded in the body by insert injection to form the integrated body, and the mesh is not exposed to the outside of the body.

An inner surface of the body includes a first vulnerable portion with lower heat resistance than a surrounding portion, and a portion of an outer surface of the body includes a second vulnerable portion with lower heat resistance than a surrounding portion.

The first vulnerable portion and the second vulnerable portion may each be made of a different synthetic resin material with a lower melting point than the body, or formed to be thinner than a surrounding portion.

The first vulnerable portion may be provided as a plurality of first vulnerable portions, and the second vulnerable portion may be provided as one second vulnerable portion so that the one second vulnerable portion is arranged equidistant from the plurality of first vulnerable portions.

The second vulnerable portion may include a filter with denser dimensions than the mesh.

### [Advantageous Effects]

A battery module part of the present invention having the above configuration is made of a composite material in which a mesh made of a metal is embedded in a body made of synthetic resin. Therefore, when a flame occurs within the battery module, a flame quenching effect is provided through the mesh structure, even when the body made of a resin with a low melting point melts and forms an outlet, only high-temperature gas is discharged and the flame is not discharged to the outside.

Also, the risk of external fire can be further reduced by forming a vulnerable portion in a body and limiting a discharge location of high-temperature gas to the vulnerable portion.

However, the technical effects that can be achieved through the present invention are not limited to the effects described above, and other effects that are not described can be clearly understood by those skilled in the art from the description of the present invention described below.

### [Brief Description of the Drawings]

The following drawings attached to this specification illustrate exemplary embodiments of the present invention, and together with the detailed description of the present invention described below, serve to provide further understanding of the technical spirit of the present invention. Therefore, the present invention should not be construed as being limited to the details described in such drawings.
FIG. 1 is a diagram illustrating an example of a battery module including a battery module part according to the present invention.
FIG. 2 is a diagram illustrating a cross-sectional structure of an end plate according to an embodiment of the present invention.
FIG. 3 is a diagram illustrating an example of combining a mesh into a body of an end plate by insert injection.
FIG. 4 is a diagram illustrating an example in which the end plate of FIG. 2 is coupled to a battery module frame.
FIG. 5 and FIG. 6 are diagrams illustrating an example of forming a vulnerable portion in each body.
FIG. 7 is a cross-sectional structure of an end plate according to another embodiment of the present invention.
FIG. 8 is a diagram illustrating a relative arrangement relationship between a first vulnerable portion and a second vulnerable portion.
FIG. 9 is a diagram illustrating an example in which a filter is provided in a second vulnerable portion formed in the end plate of FIG. 7.

### [Best Modes of the Invention]

Since the present invention may be variously changed and have various embodiments, specific embodiments will be described in detail below.

In the present invention, it should be understood that terms such as "include" and "have" are intended to indicate the presence of a feature, number, step, operation, component, part, or a combination thereof described in the specification, and they do not preclude the possibility of the presence or addition of one or more other features or numbers, steps, operations, components, parts or combinations thereof.

Also, when a first portion such as a layer, a film, an area, a plate, etc. is referred to as being "on" a second portion, this includes not only the case where the first portion is "directly on" the second portion, but also the case where a third portion is interposed therebetween. On the other hand, when a first portion such as a layer, a film, an area, a plate, etc. is referred to as being "under" a second portion, this includes not only the case where the first portion is "directly under" the second portion, but also the case where a third portion is interposed therebetween. In addition, to be disposed "on" in the present application may include the case disposed at the bottom as well as the top.

One aspect of the present invention provides a battery module part, and as an example, a battery module part includes a body made of synthetic resin and a mesh made of a metal and embedded in the body, wherein the body has a lower melting point than the mesh.

The battery module part of the present invention having the above configuration is made of a composite material in which the mesh made of a metal is embedded in the body made of synthetic resin. Therefore, when a flame occurs within the battery module, a flame quenching effect is provided through the mesh structure, even when the body made of a resin with a low melting point melts and forms an outlet, only high-temperature gas is discharged and the flame is not discharged to the outside.

### [Modes of the Invention]

Hereinafter, specific embodiments of a battery module frame of the present invention will be described in detail with reference to the attached drawings. For reference, front and rear directions or up, down, left, right directions for designating relative positions used in the following description are intended to help the understanding of the present invention and are based on directions shown in the drawings unless otherwise specified.

### [First Embodiment]

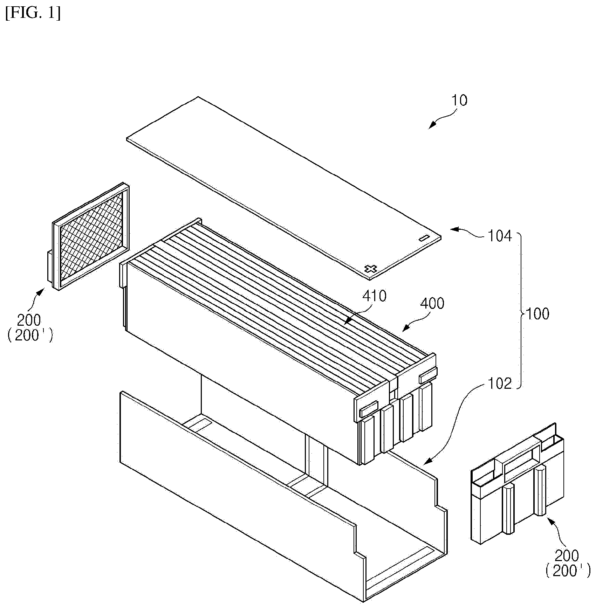

FIG. 1 is a diagram illustrating an example of a battery module 10 including a battery module part 200 according to the present invention. The battery module 10 refers to a battery assembly in which a certain number of battery cells 410 are combined and placed in a frame to protect the battery cells from external impacts, heat, vibrations, etc. The battery module 10 includes a plurality of battery cells 410 connected in series and/or parallel, and is embedded in a mechanical structure, that is, a battery module frame 100.

Each battery cell 410 plays a fundamental role in storing energy and supplying the energy to an external device when needed. However, since each battery cell has a small capacity, a module is made by combining the battery cells, and further, the modules are combined to make a battery pack.

The present invention relates to the battery module part 200 applied to a battery module 10 that protects a plurality of battery cells 410. The battery module 10 illustrated as an example in FIG. 1 includes a battery cell assembly 400 in which the plurality of battery cells 410 are connected in series and/or parallel to form one assembly.

In addition, the battery module frame 100, which is a mechanical structure that protects the plurality of battery cells 410, includes a main frame 102, which has a "U"-shaped cross section and has a space for accommodating the battery cell assembly 400 therein, and an upper plate 104 covering an open upper surface of the main frame 102. Here, an end plate 200' is coupled to both open sides of the battery module frame 100 to seal the battery module 10. In the present invention, the end plate 200' is exemplified as one battery module part 200.

The battery module 10 has a polyhedral shape that accommodates a plurality of battery cells 410, e.g., a hexahedral shape in FIG. 1, and the end plates 200' are coupled to both sides of the battery module 10. Here, the end plate 200' is coupled to an electrode lead side of the battery cell assembly 400, and accordingly, the end plate 200' may include a busbar that is electrically connected to the battery cell assembly 400.

Therefore, in the case of the end plate 200' including a busbar, the end plate 200' may be called a busbar frame. Therefore, the end plate 200' referred to in the specification of the present invention needs to be broadly understood as a battery module part 200 that seals both sides of the battery module 10, without being limited by the usage of the term.

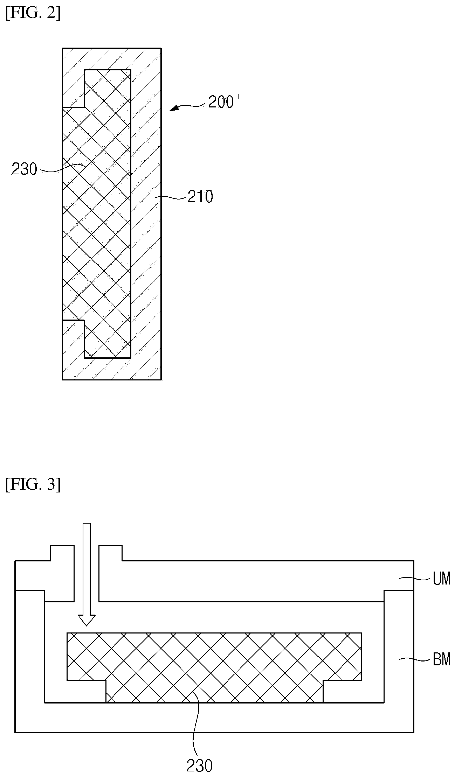

FIG. 2 illustrates a cross-sectional structure of a battery module part 200, that is, an end plate 200', according to a first embodiment of the present invention. The end plate 200' includes a body 210 made of synthetic resin and a mesh 230 made of a metal and embedded in the body 210. In particular, the body 210 made of synthetic resin has a lower melting point than the mesh 230 made of a metal.

That is, the end plate 200' of the present invention is made of a composite material in which the body 210 made of synthetic resin and the mesh 230 made of a metal and embedded in the body 210 are combined. Here, the body 210 made of synthetic resin serves as a structure that maintains the mechanical structure of the end plate 200'. Therefore, the body 210 may be made of synthetic resin with excellent mechanical strength, for example, polycarbonate.

Further, the mesh 230 contained within the body 210 made of synthetic resin may be understood as a porous metal body in a broad sense. For example, a metal net, a wire mesh, a metal thin film with a plurality of through holes, etc. may be applied as the mesh 230. Alternatively, a flat mass of wire wound with a thin metal thread in a spiral shape may be inserted into the mesh 230 made of a metal.

The end plate 200' of the present invention uses the body 210 made of synthetic resin as a structure and includes a porous mesh 230 therein. Therefore, a lightweight battery module part 200 may be implemented through weight reduction using synthetic resin materials and weight reduction through the mesh 230 structure.

In addition, the end plate 200' of the present invention not only allows the mesh 230 made of a metal and embedded in the body 210 to split into small pieces while the flame generated during thermal runaway of a battery cell 410 passes through the mesh, but also causes an endothermic reaction that absorbs the energy of the flame, resulting in a temperature drop and a flame quenching effect.

More specifically, since the mesh 230 made of a metal has a plurality of small holes, gases such as gas or steam may easily pass through the mesh 230, but it is relatively difficult for flames to pass through the plurality of small holes.

When the mixture of combustible gas and air inside the battery cell 410 ignites, the mesh 230 inside the end plate 200' absorbs and dissipates heat generated from the burning gas mixture, thereby lowering a combustion temperature to prevent the surrounding gas from reaching its spontaneous ignition temperature. This is because heat is lost to the porous structure of the metal material as the high-temperature gas passes through the mesh 230. That is, the mesh 230 is made of a metal material containing numerous holes and functions as a flame arrester with a very large cross-sectional area.

Accordingly, the flame generated by the thermal runaway of the battery cell 410 loses enough heat to no longer be maintained as it passes through the battery module part 200 of the present invention, thereby effectively suppressing a heat propagation phenomenon or external fire.

In addition, since the body 210 made of synthetic resin has a lower melting point than the mesh 230 made of a metal, the flame passing through the mesh 230 melts a part of the outer surface of the body 210 during the process of losing heat, forming a through hole. Nevertheless, since the flame is almost eliminated by the mesh 230, which functions as an ignition prevention net, high-temperature gas is mainly discharged through the through hole of the body 210 formed by melting by the flame, and almost no flame is discharged.

Meanwhile, the mesh 230 made of a metal needs to have heat-resistant properties in order to maintain its flame quenching function for a long time. In addition, it is preferable that the mesh 230 be selected from a material that has not only a flame quenching ability to suppress flames but also mechanical properties that may withstand explosion pressure. Therefore, steel or stainless steel, which has heat resistant and excellent mechanical strength, may be selected as the material for the mesh 230.

For example, the mesh 230 may be made of heat-resistant stainless steel. The heat-resistant stainless steel is a ferritic stainless steel alloy such as X10CrAlSi7, X10CrAl13, X10CrAl18 or X18CrN28, or an austenitic stainless steel alloy such as X15CrNiSi20-12, X15CrNiSi25-20, X15CrNiSi25-21 or X12CrNiTi18-10, or a nickel-chromium stainless steel alloy such as NiCr15Fe, NiCr23Fe, NiCr22Mo9Nb, NiCr21Mo or NiCr28FeSiCe.

Additionally, since the mesh 230 embedded in the body 210 is in a thin plate type, an increase in the size of the battery module 10 may be suppressed. Also, since the mesh 230 has a plurality of holes, an increase in weight may be suppressed. In addition, while the battery module part 200 of the present invention may suppress an increase in the size or weight of the battery module 10 and a battery pack in which the battery module 10 is assembled, even when a flame erupts from the battery cell 410, the safety of the battery module 10 is improved by preventing the ejection of the flame to the outside.

In one embodiment of the present invention, the mesh 230 may be embedded in the body 210 by insert injection to form an integrated body. FIG.3 exemplarily shows a process of manufacturing a battery pack part by injecting melted synthetic resin while the mesh 230 is fixed in a mold including an upper mold UM and a bottom mold BM.

Additionally, according to the embodiment of FIG. 3, since the mesh 230 is fixed in close contact with the bottom surface of the bottom mold, at least a portion of the mesh 230 is exposed on an inner surface of the body 210 of the end plate 200' as illustrated in FIG. 2. In order to embed and fix the mesh 230 in the body 210, a step for injection of the melted synthetic resin is formed on a portion of the mesh 230. However, the portion of the mesh 230 in close contact with the bottom surface of the bottom mold forms an exposed surface on the inner surface of the body 210.

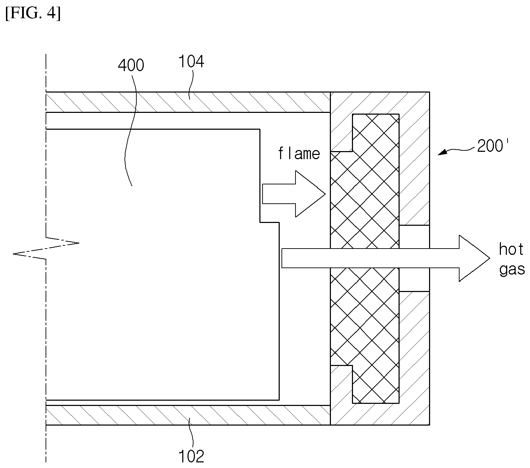

An example in which the end plate 200' of FIG. 2 is coupled to the battery module frame 100 is illustrated in FIG. 4. In the battery module 10 of FIG. 4, when a fire occurs in the battery cell 410, as the mesh 230 of the end plate 200' is exposed on the inner surface of the body 210, the flame quenching ability of the mesh 230 is exerted to block the flame when the expanding flame reaches the mesh 230. Therefore, even when a through hole is generated on the outer surface of the body 210 due to high temperature, only high temperature gas is mainly discharged and the flame is not ejected outside the end plate 200'.

However, where the through hole occurs in the end plate 200' is random. In other words, depending on a location of the flame or a shape of the end plate 200', the through hole is formed in a part that is vulnerable to heat. Even when flame does not burst through the through hole, high-temperature gas is discharged. Therefore, when there are devices or parts vulnerable to high-temperature gas or flammable near the through hole, this may cause an external fire or secondary damage.

Therefore, according to one embodiment of the present invention, by providing a vulnerable portion 220 than the surrounding portion on a portion of the outer surface of the body 210, a through hole may be induced to be formed in the vulnerable portion 220. In other words, an appropriate location of the through hole through which the high-temperature gas is discharged may be limited to the vulnerable portion 220.

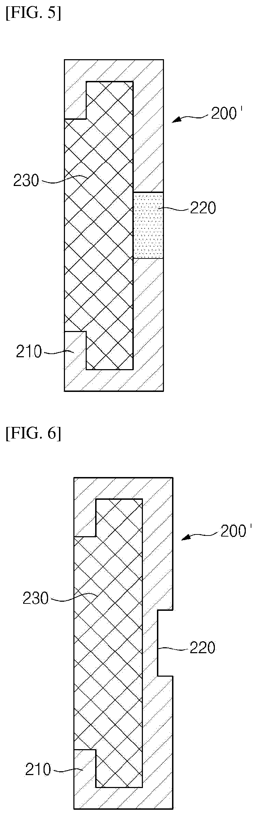

The vulnerable portion 220 can be designed in various ways. For example, as shown in FIG. 5, a different synthetic resin material with a lower melting point than the body 210 is inserted into the body 210 to form the vulnerable portion 220, or as shown in FIG. 6, a thickness of the vulnerable portion 220 may be formed thinner than the surrounding portion so that it melts faster even when it receives the same heat. However, since FIGS. 5 and 6 relate to exemplary methods for forming the vulnerable portion 220, the specific configuration of the vulnerable portion 220 is not limited by the exemplary methods.

### [Second Embodiment]

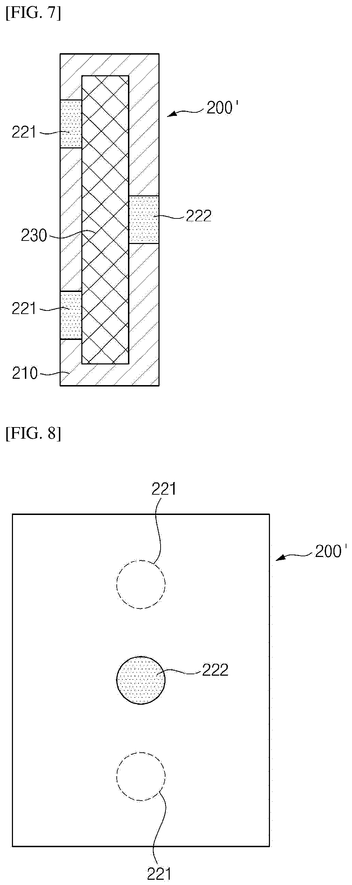

FIG. 7 is a diagram illustrating an end plate 200' according to the second embodiment of the present invention. According to the second embodiment of FIG. 7, a mesh 230 is embedded in a body 210 through insert injection to form an integrated body, and the mesh 230 is not exposed to the outside of the body 210.

That is, the end plate 200' of the second embodiment has a structure in which the mesh 230 is fully embedded in the body 210, and the mesh 230 is not exposed anywhere on an outer surface as well as an inner surface of the body 210. Therefore, when a fire occurs inside the battery module 10, a high temperature flame melts the inner surface of the body 210, the flame flows into the mesh 230 when the mesh 230 is exposed, and the mesh 230 exerts a flame quenching function to block the flame.

The end plate 200' of the second embodiment has the advantage of being structurally stronger because there is no cut surface exposing the mesh 230 in the body 210. Therefore, the second embodiment may be a more suitable embodiment when the size and weight of the battery module 10 are large.

However, in the second embodiment, the flame quenching function does not work immediately because the mesh 230 is exposed after the high temperature flame melts the inner surface of the body 210, and where a through hole is formed in the inner surface of the body 210 is random. Therefore, as shown in FIG. 7, it may be preferable to provide a first vulnerable portion 221, which has lower heat resistance than the surrounding portion, on the inner surface of the body 210 to induce the through hole to be formed in the first vulnerable portion 221.

Additionally, as described in the first embodiment, as a second vulnerable portion 222, which has lower heat resistance than the surrounding portion, is formed on a portion of the outer surface of the body 210, an appropriate location of the through hole through which high-temperature gas is discharged may be limited to the second vulnerable portion 222. In addition, the first vulnerable portion 221 and the second vulnerable portion 222 may each be made of a different synthetic resin material with a lower melting point than the body, or may be formed to be thinner than the surrounding portion. FIG. 7 illustrates an embodiment in which the first vulnerable portion 221 and the second vulnerable portion 222 are made of a different synthetic resin material with a lower melting point than the body 210.

Additionally, FIG. 8 is a diagram illustrating a relative arrangement relationship between a first vulnerable portion and a second vulnerable portion. A plurality of first vulnerable portions 221 are provided, and one second vulnerable portion 222 is provided and arranged equidistant from the plurality of first vulnerable portions 221. This is to ensure that the flame quenching action of the mesh 230 may be sufficiently exerted by allowing the flame entering the first vulnerable portion 221 to be discharged to the second vulnerable portion 222 after traveling as long as possible.

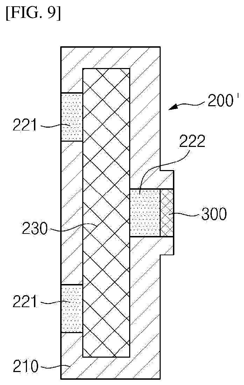

FIG. 9 illustrates a configuration in which a filter 300 with denser dimensions than the mesh 230 inside the body 210 is provided in the second vulnerable portion 222 in the end plate 200' of the second embodiment. When the flame that has passed through the mesh 230 bursts through the second vulnerable portion 222, almost no flame remains and is discharged in the form of a high-temperature gas. The high-temperature gas may include high-temperature particles that may act as an ignition source for an external fire.

The embodiment of FIG. 9 is intended to prevent fires caused by high-temperature particles, and the filter 300 provided in the second vulnerable portion 222, and in particular, a filter 300 that is denser than the mesh 230 is provided in the second vulnerable portion 222 so that particles having the same size as that of particles passing through the mesh 230 may be filtered, thereby preventing the risk of external fires more effectively.

In the above, the present invention has been described in more detail through drawings and examples. However, since the configurations described in the drawings or examples described in the specification are only one embodiment of the present invention and do not represent the entire technical idea of the present invention, it should be understood that, there may be various equivalents and variations at the time of filing this application.

### [Description of reference numerals]

| | | | |
|---|---|---|---|
| 10: | battery module | 100: | battery module frame |
| 102: | main frame | 104: | upper plate |
| 200: | battery module part | 200': | end plate |
| 210: | body | 220: | vulnerable portion |
| 221: | first vulnerable portion | 222: | second vulnerable portion |
| 230: | mesh | 300: | filter |
| 400: | battery cell assembly | 410: | battery cell |
| UM: | upper molding | BM: | bottom molding |

## Claims

1. A battery module part (200) comprising:
a body (210) made of synthetic resin; and
a mesh (230) made of a metal and embedded in the body (210),
wherein the body (210) has a lower melting point than the mesh (230),
wherein the body (210) forms an end plate (200') of a battery module frame (100), and the body (210) made of synthetic resin serves as a structure that maintains the mechanical structure of the end plate (200'),
the module being **characterised in that** the mesh (230) is embedded in the body (210) by insert injection to form the integrated body, and the mesh (230) is not exposed to an outside of the body (210),
wherein a portion of the body is provided as a vulnerable portion (220) which has lower heat resistance than a surrounding portion of the body (210) to discharge high temperature gas.

2. The battery module part (200) of claim 1, wherein the mesh (230) is embedded in the body (210) by insert injection to form an integrated body, and
at least a portion of the mesh (230) is exposed on an inner surface of the body (210).

3. The battery module part (200) of claim 2, wherein a portion of an outer surface of the body (210) includes the vulnerable portion (220) with lower heat resistance than a surrounding portion.

4. The battery module part (200) of claim 3, wherein the vulnerable portion (220) is made of a different synthetic resin material with a lower melting point than the body (210) or formed to be thinner than a surrounding portion.

5. The battery module part (200) of claim 1, wherein a metal material of the mesh (230) is heat-resistant stainless steel.

6. The battery module part (200) of claim 1, wherein an inner surface of the body (210) includes a first vulnerable portion (221) with lower heat resistance than a surrounding portion.

7. The battery module part (200) of claim 6, wherein a portion of an outer surface of the body (210) includes a second vulnerable portion (222) with lower heat resistance than a surrounding portion.

8. The battery module part (200) of claim 7, wherein the first vulnerable portion (221) and the second vulnerable portion (222) are each made of a different synthetic resin material with a lower melting point than the body (210) or formed to be thinner than a surrounding portion.

9. The battery module part (200) of claim 7, wherein:
the first vulnerable portion (221) is provided as a plurality of first vulnerable portions (221); and
the second vulnerable portion (222) is provided as one second vulnerable portion (222) so that the second vulnerable portion (222) is arranged equidistant from the plurality of first vulnerable portions (221).

10. The battery module part (200) of claim 7, wherein the second vulnerable portion (222) includes a filter with finer dimensions than the mesh (230).

## Patentansprüche

1. Batteriemodulteil (200), umfassend:
einen Körper (210) aus Kunstharz; und
ein Gitter (230) aus einem Metall, das in dem Körper (210) eingebettet ist,
wobei der Körper (210) einen niedrigeren Schmelzpunkt als das Gitter (230) aufweist,
wobei der Körper (210) eine Endplatte (200') eines Batteriemodulrahmens (100) bildet, und der Körper (210) aus Kunstharz als eine Struktur dient, die die mechanische Struktur der Endplatte (200') aufrechterhält,
wobei das Teil **dadurch gekennzeichnet ist, dass**
das Gitter (230) durch Umspritzung in den Körper (210) eingebettet ist, um den integrierten Körper zu bilden, und das Gitter (230) nicht nach einer Außenseite des Körpers (210) freigelegt ist,
wobei ein Abschnitt des Körpers als ein anfälliger Abschnitt (220) bereitgestellt ist, der eine geringere Wärmebeständigkeit als ein umgebender Abschnitt des Körpers (210) aufweist, um Hochtemperaturgas abzuführen.

2. Batteriemodulteil (200) nach Anspruch 1, wobei das Gitter (230) durch Umspritzung in den Körper (210) eingebettet ist, um einen integrierten Körper zu bilden, und
mindestens ein Teil des Gitters (230) an einer Innenfläche des Körpers (210) freigelegt ist.

3. Batteriemodulteil (200) nach Anspruch 2, wobei ein Abschnitt einer Außenfläche des Körpers (210) den anfälligen Abschnitt (220) mit geringerer Wärmebeständigkeit als ein umgebender Abschnitt einschließt.

4. Batteriemodulteil (200) nach Anspruch 3, wobei der anfällige Abschnitt (220) aus einem anderen Kunstharzmaterial mit einem niedrigeren Schmelzpunkt als der Körper (210) hergestellt oder so ausgebildet ist, dass er dünner als ein umgebender Abschnitt ist.

5. Batteriemodulteil (200) nach Anspruch 1, wobei ein Metallmaterial des Gitters (230) hitzebeständiger Edelstahl ist.

6. Batteriemodulteil (200) nach Anspruch 1, wobei eine Innenfläche des Körpers (210) einen ersten anfälligen Abschnitt (221) mit geringerer Wärmebeständigkeit als ein umgebender Abschnitt einschließt.

7. Batteriemodulteil (200) nach Anspruch 6, wobei ein Abschnitt einer Außenfläche des Körpers (210) einen zweiten anfälligen Abschnitt (222) mit geringerer Wärmebeständigkeit als ein umgebender Abschnitt einschließt.

8. Batteriemodulteil (200) nach Anspruch 7, wobei der erste anfällige Abschnitt (221) und der zweite anfällige Abschnitt (222) jeweils aus einem anderen Kunstharzmaterial mit einem niedrigeren Schmelzpunkt als der Körper (210) hergestellt oder so ausgebildet sind, dass sie dünner als ein umgebender Abschnitt sind.

9. Batteriemodulteil (200) nach Anspruch 7, wobei:
der erste anfällige Abschnitt (221) als eine Vielzahl von ersten anfälligen Abschnitten (221) bereitgestellt ist; und
der zweite anfällige Abschnitt (222) als ein zweiter anfälliger Abschnitt (222) bereitgestellt ist, so dass der zweite anfällige Abschnitt (222) in gleichem Abstand von der Vielzahl der ersten anfälligen Abschnitte (221) angeordnet ist.

10. Batteriemodulteil (200) nach Anspruch 7, wobei der zweite anfällige Abschnitt (222) einen Filter mit feineren und dichteren Abmessungen als das Gitter (230) einschließt.

## Revendications

1. Pièce de module de batterie (200) comprenant :
un corps (210) en résine synthétique ; et
un treillis (230) en métal et encastré dans le corps (210),
dans laquelle le corps (210) a un point de fusion inférieur à celui du treillis (230),
dans laquelle le corps (210) forme une plaque d'extrémité (200') d'un cadre de module de batterie (100), et le corps (210) en résine synthétique sert de structure qui maintient la structure mécanique de la plaque d'extrémité (200'),
la pièce étant **caractérisée en ce que**
le treillis (230) est encastré dans le corps (210) par moulage par insertion pour former le corps intégré, et le treillis (230) n'est pas exposé à un extérieur du corps (210),
dans laquelle une partie du corps est prévue comme une partie vulnérable (220) qui a une résistance thermique inférieure à une partie environnante du corps (210) pour évacuer un gaz à haute température.

2. Pièce de module de batterie (200) selon la revendication 1, dans laquelle le treillis (230) est encastré dans le corps (210) par moulage par insertion pour former un corps intégré, et
au moins une partie du treillis (230) est exposée sur une surface intérieure du corps (210).

3. Pièce de module de batterie (200) selon la revendication 2, dans laquelle une partie d'une surface extérieure du corps (210) comprend la partie vulnérable (220) avec une résistance thermique inférieure à une partie environnante.

4. Pièce de module de batterie (200) selon la revendication 3, dans laquelle la partie vulnérable (220) est faite d'un matériau de résine synthétique différent avec un point de fusion inférieur à celui du corps (210) ou est formée pour être plus mince qu'une partie environnante.

5. Pièce de module de batterie (200) selon la revendication 1, dans laquelle un matériau métallique du treillis (230) est de l'acier inoxydable résistant à la chaleur.

6. Pièce de module de batterie (200) selon la revendication 1, dans laquelle une surface intérieure du corps (210) comprend une première partie vulnérable (221) avec une résistance thermique inférieure à une partie environnante.

7. Pièce de module de batterie (200) selon la revendication 6, dans laquelle une partie d'une surface extérieure du corps (210) comprend une seconde partie vulnérable (222) avec une résistance thermique inférieure à une partie environnante.

8. Pièce de module de batterie (200) selon la revendication 7, dans laquelle la première partie vulnérable (221) et la seconde partie vulnérable (222) sont chacune faites d'un matériau de résine synthétique différent avec un point de fusion inférieur à celui du corps (210) ou sont formées pour être plus minces qu'une partie environnante.

9. Pièce de module de batterie (200) selon la revendication 7, dans laquelle :
la première partie vulnérable (221) est prévue comme une pluralité de premières parties vulnérables (221) ; et
la seconde partie vulnérable (222) est prévue comme une unique seconde partie vulnérable (222) de sorte que la seconde partie vulnérable (222) est disposée à équidistance de la pluralité de premières parties vulnérables (221).

10. Pièce de module de batterie (200) selon la revendication 7, dans laquelle la seconde partie vulnérable (222) comprend un filtre avec des dimensions plus fines et plus denses que le treillis (230).
